# EUROPEAN PATENT APPLICATION

(11) **EP 2 851 195 A1**
(43) Date of publication of application: **25.03.2015**
(21) Application number: 13791502.1
(22) Date of filing: 30.04.2013
(51) Int. Cl.: B32B 17/10, C03C 17/28, C03C 21/00, G02F 1/13

(54) **DEVICE FOR PROTECTING LIQUID CRYSTAL GLASS**

(30) Priority: 14.05.2012 KR 20120051079
(71) Applicant: Willnics Co. Ltd., Gyeongsangbuk-do 730-853 (KR)
(72) Inventor: KIM, Byung Hwan, Gumi-si Gyeongsangbuk-do 730-795 (KR)
(74) Representative: Persson, Albin
(86) International application number: PCT/KR2013/003702
(87) International publication number: WO 2013/172574

(57) **Abstract**

The present invention relates to a device for protecting the glass substrate(10) of liquid crystal. The device comprises a double-sided tape(20) that has the top adhesive(24) and the bottom adhesive(25) on the top and the bottom of the film(21) respectively to be attached to the glass substrate(10) and a pattern member(30) that has a sputtered anti-fingerprint layer(33) on the top of the tempered glass plate(31) that is attached to the top of the double-sided tape(20) and mark patterns with or without the design layer(34) and the shielding layer(35) on the bottom. The present invention includes the double-sided tape(20) that uses optically clear adhesive(OCA) as the top adhesive(24) applied to the top of the film(21) and uses pressure sensitive adhesive(PSA) as the bottom adhesive(25) applied to the bottom of the film(21).

The effects of the present invention are the provision of good visibility, the prevention of scratches or damages caused by external shocks and the embodiment in an easily replaceable way..

## Description

### FIELD OF THE INVENTION

The present invention relates to a device for protecting the glass substrate of liquid crystal attached additionally to a smart phone and etc. Specifically, the present invention relates to a device for protecting liquid crystal glass that provides good visibility, prevents scratches or damages caused by external shocks and can be embodied in an easily replaceable way.

### TECHNICAL BACKGROUND OF THE INVENTION

As the use of liquid crystal display(LCD) for all kinds of household items and industrial equipments increases, various means for protecting LCD and improving its appearance are being introduced. The demand for such means is increasing greatly especially in case of portables like cell phones, laptops and iPads. For example, Korean Patent Publication No.0794331 entitled "Screen Protection Unit for Display Apparatus", No.0500140 entitled "Method for Coating of Color/Pattern on Tempered Glass" and etc. disclose related technologies.

In one example, Korean Patent Publication No.0794331 discloses an apparatus composed of a protecting panel that consists of the penetration part on the screen of a display unit to protect the screen from external shocks and the frame part around the penetration part, an attaching means used to attach the edges of the screen on a side of the frame part and a filter member used for facilitating the flow of air on a side of the screen and for blocking the penetration of foreign matters. By attaching to the screens of all kinds of display apparatuses, you can expect the protection of the screens vulnerable to external shocks.

In another example, Korean Patent Publication No.0500140 disclose a method that proceeds sequentially to the bottom painting stage where adhesive is sprayed on a side of tempered glass, to the 1^{st} drying stage and the transfer stage where a certain color or pattern is transferred by pressurizing a transfer paper on the top of the bottom painting, to the top painting stage where paint is sprayed on the top of the transfer surface and to the 2^{nd} drying stage. You can create beautiful appearance by applying various colors or patterns and expect mass production because it has great reproducibility when manufactured repeatedly.

However, the former is limited in improving the appearance because it is not related to providing good visibility although it protects scratches or damages of displays, while the latter can be easily used for mass production systems and create beautiful appearance but not protect scratches or damages of displays.

### DESCRIPTION OF THE INVENTION

### PROBLEMS TO BE SOLVED BY THE INVENTION

As a device developed to solve the problems mentioned above, the present invention relates to a device for protecting LCD glass attached additionally to a smart phone and etc. to provide good visibility, prevent scratches or damages caused by external shocks and embody various colored patterns in an easily replaceable way.

### MEANS FOR SOLVING PROBLEMS

The present invention relates to a device for protecting the glass substrate(10) of LCD. The device comprises a double-sided tape(20) that has the top adhesive(24) and the bottom adhesive(25) on the top and the bottom of the film(21) respectively to be attached to the glass substrate(10) and a pattern member(30) that has a sputtered anti-fingerprint layer(33) on the top of the tempered glass plate(31) that is attached to the top of the double-sided tape(20) and mark patterns with or without the design layer(34) and the shielding layer(35) on the bottom.

The present invention includes the double-sided tape(20) that uses optically clear adhesive(OCA) as the top adhesive(24) applied to the top of the film(21) and uses pressure sensitive adhesive(PSA) as the bottom adhesive(25) applied to the bottom of the film(21).

The present invention includes the top adhesive(24) of the double-sided tape(20) applied to the top of the film(21) in the thickness of approximately 20∼300µm and the bottom adhesive(25) of the double-sided tape(20) applied to the bottom of the film(21) in the thickness of approximately 10∼100µm.

The present invention includes the pattern member(30) that usually has the anti-fingerprint layer(33) on the top of the tempered glass plate(31) and sequentially forms the design layer(34) and the shielding layer on the bottom. But it may have the anti-fingerprint layer(33) on the top of the tempered glass plate(31) without the design layer(34) and the shielding layer on the bottom.

The interpretation of the terms and the words used in this specification and the patent claims should not be limited to usual or dictionary definitions but they should be interpreted as meanings and concepts that comply with the technical ideas of the present invention based on the principle that the inventor can define the concept of terms properly to explain the invention in the best way. Therefore, the working example of the present invention given in this specification and the configuration indicated in the drawings is only one of the most desirable examples, not representing all the technical ideas of the present invention. Therefore, it is required to understand that there may be various equivalents and modifications that can substitute these examples at the point of the patent application.

### [EFFECT OF THE INVENTION]

As stated above, the effects of the present invention are the provision of good visibility, the prevention of scratches or damages caused by external shocks and the embodiment in an easily replaceable way.

### BRIEF DESCRIPTION OF THE DRAWINGS

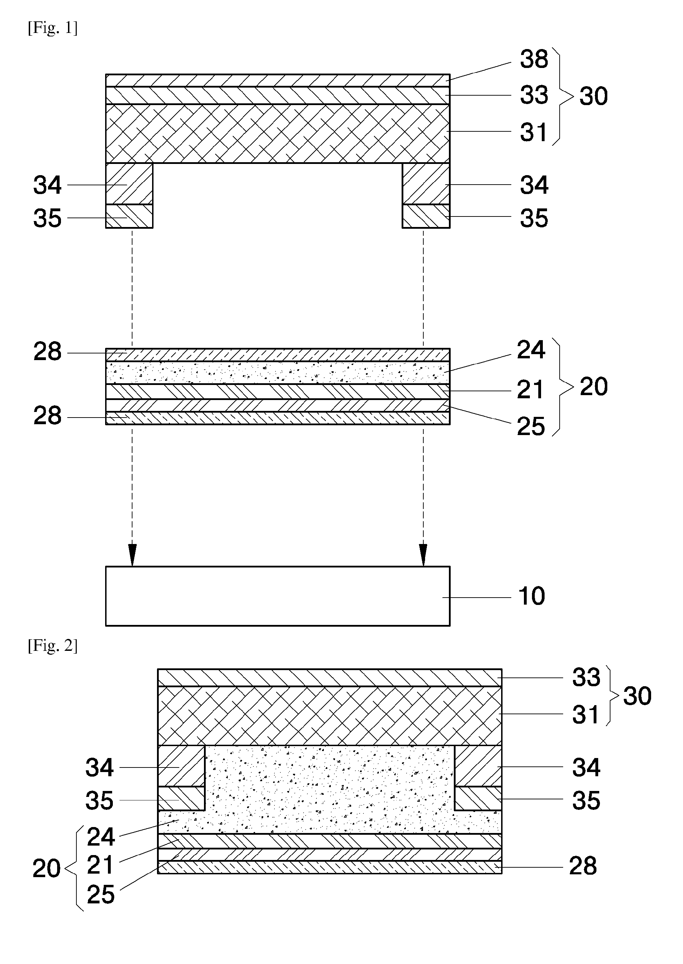

FIG. 1 is a drawing that shows the disassembly of the LCD glass protecting device according to the given example.
FIG. 2 is a drawing that shows the adhesion of the LCD glass protecting device according to the given example.

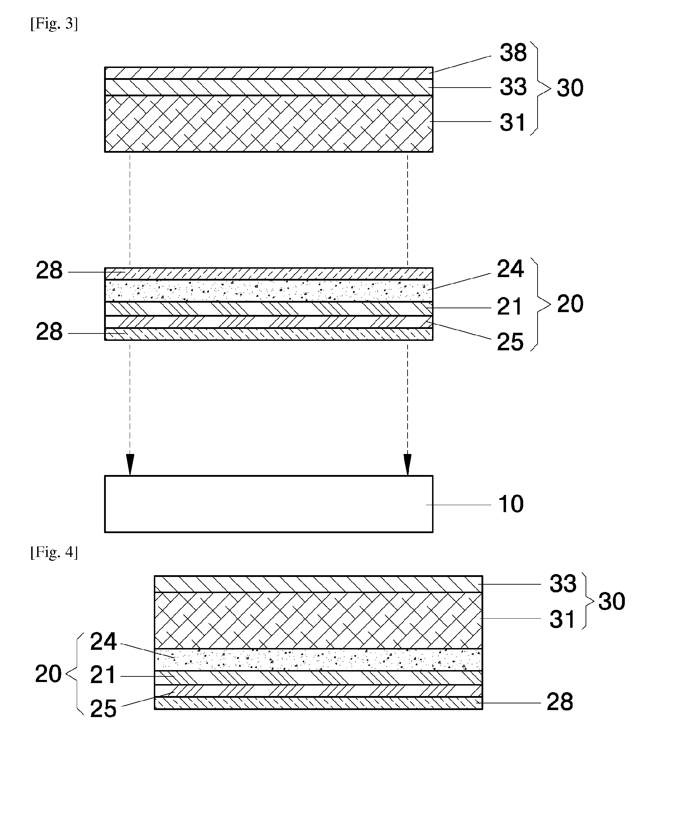

FIG. 3 is a drawing that shows the disassembly of LCD glass protecting device according to another example.
FIG. 4 is a drawing that shows the adhesion of the LCD glass protecting device according to the example shown in FIG. 3.

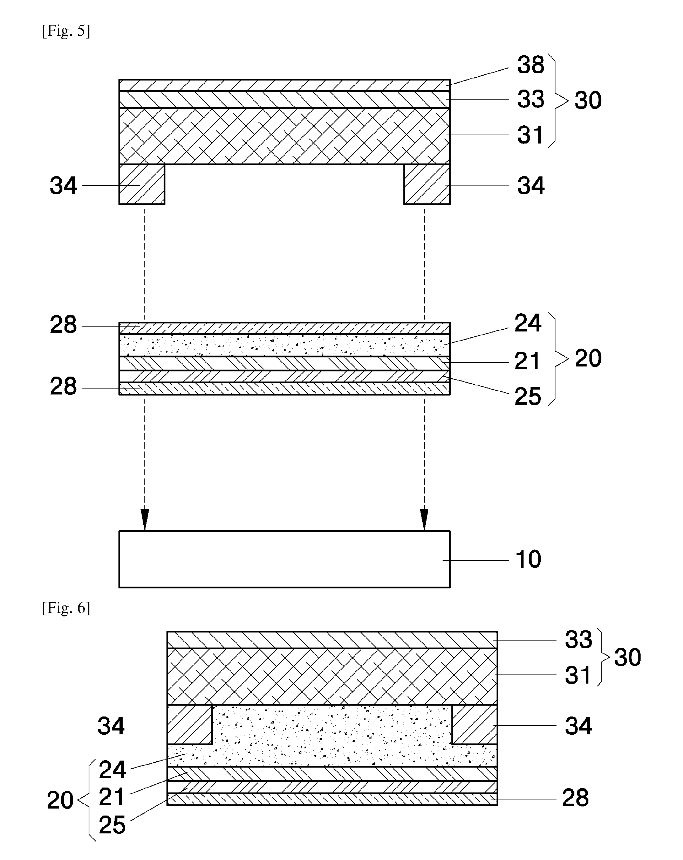

FIG. 5 is a drawing that shows the disassembly of LCD glass protecting device according to another example not mentioned above.

### DETAILED DESCRIPTION OF WORKING EXAMPLES OF THE INVENTION

Based on the attached drawings, the details of the working examples of the present invention are as described below.

The present invention relates to a device for protecting the glass substrate(10) of LCD, especially to the bare glass type and used as the display of an electronic products such as the touch panels of cell phones (including smart phones), laptops and iPads. The glass substrate(10) is usually manufactured with tempered glass or other materials that have the equivalent properties and accompanies a protecting apparatus with good visibility and wear resistance to improve durability.

The present invention includes a double-sided tape(20) that has the top adhesive(24) and the bottom adhesive(25) on the top and the bottom of the film(21) respectively to be attached to the glass substrate(10). It is recommended to use PET materials for the film(21), and if necessary, it is possible to apply or not to apply corona coating, which is a treatment to prevent or remove foreign matters on the film and it is required to be careful that it will break the high molecules of the film and cause oxidation if exceeding the optimum level. In other words, if the thickness of the film(21) is lower or higher than the set value, the visibility is slightly weakened. For the top adhesive(24) and the bottom adhesive(25) used for the film(21), refer to the detailed configuration stated below.

The present invention includes a pattern member(30) that has the design layer(34) and the shielding layer(35) on the bottom of the tempered glass plate(31) that is attached to the top of the double-sided tape(20) and mark patterns. The tempered glass plate(31) has a function to prevent primarily the scratches or damages caused by external shocks and is configured in an easily replaceable way, while the design layer(34) that is formed on the bottom of the tempered glass plate(31) is configured to embody various colored patterns. Maintain this design layer(34) equally to the width of the film(21) and print the preset patterned drawing with a digital printer. Since it is impossible to embody various designs with the traditional painting methods (for example, spray painting method), use a digital printer in consideration of the productivity of mass production. The design layer(34) can be embodied by various colors, patterns and logos without special limit if they are for the improvement of the decoration of the display, which is one of the main purposes of the present invention.

As an example for design of the pattern member(30), it is recommended to select a structure in the thickness of approximately 0.1∼3mm (desirable thickness: 0.2∼0.5mm) for the tempered glass plate(31). However, it is not necessarily limited to the above thickness range but possible to increase/decrease according to the products. It is recommended to set the thickness of the design layer to 0.1∼30µm(desirable thickness: 0.3∼3µm) and the thickness of the shielding layer(35) to 1∼120µm(desirable thickness: 3∼30µm) but possible to increase/decrease. It is obvious that the thickness that deviates from this range also complies with the working examples.

In other words, it is possible to form the design layer(34) of the pattern member(30) in the thickness of 0.1∼30µm on the frame or a certain part located in the opposite side of the tempered glass plate(31). If the thickness of the design layer(34) is lower or higher than the set value, the visibility may be weakened in terms of decoration.

It is also possible to set the thickness of the shielding layer(35) to 1∼120µm(desirable thickness: 3∼30µm) to enhance the visibility of the design on the bottom of the design layer(34) of the pattern member(30). The shielding layer(35) is formed to have the same width as the design layer(34) by the silk printing method. If the thickness of the design layer(34) is lower than the set value, the visibility is weakened. If higher than the set value, this causes cost increase. The color uniformity may be degraded if printing a certain design repeatedly by the silk printing method. However, the shielding layer(35) is set to white (or various other colors) and does not cause any degradation of quality.

The pattern member(30) also has the sputtered anti-fingerprint layer(33) on the top of the tempered glass plate(31). If forming the anti-fingerprint layer(33) by the sputtering method, the wear resistance of the tempered glass plate(31) increases, and the occurrence of scratches decreases. This means that the stains caused by fingerprints are prevented and clear screens are maintained.

Meanwhile, it is recommended to put the protecting paper(38) on the top of the tempered glass plate(31) to the upper direction of the anti-fingerprint layer(33). The protecting paper(38) is attached temporarily and then easily removed after preventing the damage of the anti-fingerprint layer(33).

Another working example of the present invention is that it is possible to configure the tempered glass plate(31) without both the design layer(34) and the shielding layer(35) (as shown in Drawings 3 and 4) or without the shielding layer(35) only (as shown in Drawings 5 and 6). In other words, it is possible to configure the pattern member(30) with only the tempered glass plate(31), the anti-fingerprint layer(33) and the protecting paper(38) (as shown in Drawings 3 and 4; in this case, the design layer and the shielding layer are excluded) or to put the anti-fingerprint layer(33) and the protecting paper(38) on the top of the tempered glass plate(31) and the design layer(34) on the bottom without the shielding layer(35). The reason for the exclusion of the shielding layer(35) is that white color itself functions as a shielding apparatus if the color of the design layer(34) is white. The main color has been usually black until recently. In this case, it is desirable to put the shielding layer(35) on the bottom of the design layer(34). However, if the color of the design layer(34) is white, white color itself functions as a shielding apparatus. Therefore, it is fine without the shielding layer(35).

For the mass production of the double-sided tape(20) of the present invention, it is recommended to attach the release paper(28) on the top and the bottom respectively.

In case of the double-sided tape(20) shown from Drawing 1 to Drawing 6, it is recommended to select a sheet structure that uses optically clear adhesive(OCA) for the top adhesive(24) applied to the top of the filim(21) in the thickness of 20∼300µm(desirable thickness: 100∼200µm) and pressure sensitive adhesive(PSA) for the bottom adhesive(25) applied to the bottom of the film(21) in the thickness of 10∼100µm(desirable thickness: 20∼35µm). However, it is not necessarily limited to the above thickness range but possible to increase/decrease according to the products. It is obvious that the thickness that deviates from this range also complies with the working examples.

For mass production, it is possible to perform a continuous process where the film(21) is supplied on the roll and the top adhesive(24) and the bottom adhesive(25) of the double-sided tape(20) are applied simultaneously. In case of the pattern member(30), it is possible to perform a continuous process where the anti-fingerprint layer(33), the design layer(34) and the shielding layer(35) are formed simultaneously while the tempered glass plate(31) is transferred. Users themselves can proceed to the process of attaching the double-sided tape(20) and the pattern member(30) to the glass substrate(10) after the release of the product.

If using an additional case that makes the double-sided tape(20) and the pattern member(30) wrap up the completed product, which is not shown in the drawings, users can embody various patterns of the design layer(34) by replacing the case.

There are other working examples of the present invention besides the given example, and it is obvious to common knowledge in the field of this technology that the present invention is variously modifiable and transformable without deviation from the idea and the scope of the present invention. Therefore, the examples of such modifications and transformations fall into the scope of patent claims for the present invention.

### DESCRIPTION OF CODES

| | |
|---|---|
| 10: Glass Substrate | 20: Double-Sided Tape |
| 21: Film | 24: Top Adhesive |
| 25: Bottom Adhesive | 28: Release Paper |
| 30: Pattern Member | 31: Tempered Glass Plate |
| 33. Anti-Fingerprint Layer | 34: Design Layer |
| 35: Shielding Layer | 38: Protecting Paper |

## Claims

1. A device for protecting the glass substrate(10) of liquid crystal, the device comprising:
a double-sided tape(20) that has the top adhesive(24) that uses optically clear adhesive(OCA) applied to the top of the film(21) in the thickness of approximately 20∼300µm and the bottom adhesive(25) that uses pressure sensitive adhesive(PSA) applied to the bottom of the film(21) in the thickness of approximately 10∼100µm to be attached to the glass substrate(10); and
a pattern member(30) that has a sputtered anti-fingerprint layer(33) on the top of the tempered glass plate(31) that is attached to the top of the double-sided tape(20) and mark patterns, has the design layer(34) applied to the frame or a certain part located in the opposite side of the tempered glass plate(31) in the thickness of approximately 0.1∼30µm and forms the shielding layer(35) on the bottom of the design layer(34) in the thickness of approximately 1∼120µm to enhance the visibility of the design.

2. The device of claim 1,
wherein the pattern member(30) forms only the anti-fingerprint layer(33) on the top of the tempered glass plate(31) or forms only the design layer(34) on the bottom along with the anti-fingerprint layer(33) on the top of the tempered glass plate(31).
